# EUROPÄISCHE PATENTSCHRIFT

(11) **EP 3 702 203 B1**
(45) Veröffentlichungstag und Bekanntmachung des Hinweises auf die Patenterteilung: **05.07.2023**
(21) Anmeldenummer: 19020093.1
(22) Anmeldetag: 27.02.2019
(51) Int. Cl.: B60M 1/28, B60M 1/30

(54) **FETTMANSCHETTE**
LUBRICATION SLEEVE
COUPELLE DE GRAISSE

(43) Veröffentlichungstag der Anmeldung: 02.09.2020
(73) Patentinhaber: Furrer + Frey AG, 3005 Bern (CH)
(72) Erfinder: CASALI, Bruno, 3125 Toffen/BE (CH); RIETMANN, Michael, 4500 Solothum (CH)
(74) Vertreter: von Bülow & Tamada

(56) Entgegenhaltungen:
- EP-A1- 0 593 350
- DE-A1-102012 021 358
- DE-A1-102013 225 482
- "Deckenstromschienen DSS System Furrer+Frey", , 1. Januar 2012 (2012-01-01), XP055179899, Gefunden im Internet: URL:https://www.furrerfrey.ch/dam/jcr:62de d366-a480-448e-b2d1-344628976b93/F%20F_DSS _DE_low.pdf [gefunden am 2015-03-27]
- FURRER B: "DECKENSTROMSCHIENE IM BERLINER NORD-SUED-FERNBAHNTUNNEL//OVERHEAD CONDUCTOR RAIL FOR NORTH-SOUTH LONG DISTANCE RAILWAY TUNNEL IN BERLIN//CATENAIRE RIGIDE POUR LE TUNNEL NORD-SUD DE GRANDES LIGNES A BERLIN", EB- ELEKTRISCHE BAHNEN, DIV-DEUTSCHER INDUSTRIEVERLAG, Bd. 101, Nr. 4/05, 1. April 2003 (2003-04-01), Seiten 191-194, XP001167725, ISSN: 0013-5437

## Beschreibung

Die vorliegende Erfindung betrifft eine Einfettvorrichtung für einen in eine Stromschiene einklemmbaren Fahrdraht zur elektrischen Energieversorgung eines Pantographen eines Schienenfahrzeuges und ein Verfahren zum Einfetten eines Fahrdrahtes zur elektrischen Energieversorgung eines Pantographen eines Schienenfahrzeuges.

Aus der ES 2 409 085 A2 sind eine Einfettvorrichtung gemäß dem Oberbegriff des geltenden Anspruchs 1 sowie ein Verfahren gemäß dem Oberbegriff des geltenden Anspruchs 15 bekannt.

Aus der EP 0 593 350 A1 ist ein Verfahren zum Einfetten eines Fahrdrahtes gemäß dem Oberbegriff des geltenden Anspruchs 15 bekannt.

Aus der Druckschrift *"*Deckenstromschienen DSS System Furrer+ Frey": Furrer+ Frey AG, Bern, 2012 sind verschiedene Typen von Deckenstromschienen zum Tragen von Fahrdrähten bekannt.

Aufgabe der Erfindung ist es, die bekannte Einfettvorrichtung und das bekannte Verfahren zu verbessern.

Die Aufgabe wird durch die Merkmale der unabhängigen Ansprüche 1 und 15 gelöst. Bevorzugte Weiterbildungen sind Gegenstand der abhängigen Ansprüche.

Gemäß einem Aspekt der Erfindung, umfasst eine Einfettvorrichtung nach Anspruch 1 für einen in eine Stromschiene einklemmbaren Fahrdraht zur elektrischen Energieversorgung eines Pantographen eines Schienenfahrzeuges, umfassend einen Grundkörper, der sich in einer Längsrichtung, einer rechtwinklig zur Längsrichtung liegenden Querrichtung und einer rechtwinklig zur Längsrichtung und rechtwinklig zur Querrichtung liegenden Höhenrichtung erstreckt, eine den Grundkörper von einer in der Längsrichtung gesehenen Vorderseite zu einer in der Längsrichtung gesehenen Rückseite hin durchdringende Durchgangsöffnung, durch die der Fahrdraht in der Längsrichtung durchschiebbar ist, und eine in die Durchgangsöffnung führende Versorgungsleitung zum Einleiten eines auf den Fahrdraht auftragbaren Fettes. Die Form des Grundkörpers kann dabei beliebig sein und ist nicht auf die Form eines Quaders oder dergleichen begrenzt.

Erfindungsgemäß besitzt die Durchgangsöffnung in der Längsrichtung gesehen nach der Versorgungsleitung an einer in der Höhenrichtung gesehenen Oberseite eine entgegen der Höhenrichtung ausgerichtete Nase, die eingerichtet ist, um den Fahrdraht gegen eine in der Höhenrichtung gesehene Bodenseite der Durchgangsöffnung zu drücken, so dass eine Furche in das auf den Fahrdraht aufgetragene Fett geschnitten wird.

Der angegebenen Vorrichtung liegt die Überlegung zugrunde, dass das auf den Fahrdraht aufzutragende Fett diesen vor Umwelt- und anderen Verwitterungseinflüssen schützen soll. Weil die Stromschiene in der Regel aus einem Material gefertigt wird, das in der elektrochemischen Spannungsreihe einen sehr hohen Standartpotentialabstand zum Material des Fahrdrahtes besitzt, führt eine Wasseransammlung im Bereich der Klemmstelle zwischen der Stromschiene und des Fahrdrahtes sehr schnell zu Korrosion.

Mit der eingangs genannten Einfettvorrichtung lässt sich an der Klemmstelle zwischen der Stromschiene und des Fahrdrahtes zwar Fett auf den Fahrdraht auftragen, welches die Wasseransammlung in diesem Bereich vermeidet, problematisch ist allerdings, dass das Fett vollständig auf den Fahrdraht aufgetragen wird und so beispielsweise vom Pantographen eines nachkommenden Schienenfahrzeuges bei der Stromaufnahme wieder abgestriffen wird. Das führt nicht nur zu einem unwirtschaftlich hohen Verbrauch an Fett, das abgestriffene Fett tropft auch herunter und verunreinigt so die Umgebung.

Hier greift die angegebene Einfettvorrichtung mit dem Vorschlag an, das Fett in den Bereichen des Fahrdrahtes, die nicht zu den Klemmstellen gehören, abzustreifen. Hierzu drückt die Nase den Fahrdraht zur Unterseite der Durchgangsöffnung, so dass an der Stelle des Fahrdrahtes, an der der Pantograph des Schienenfahrzeuges angreifen soll erst gar kein Fett aufgetragen wird. Auch der Bereich des Fahrdrahtes zwischen den beiden Klemmstellen bleibt so weitestgehend fettfrei.

In einer Weiterbildung der angegebenen Einfettvorrichtung ist die Durchgangsöffnung in einer in einem Führungskörperteil des Grundkörpers eingeformten und durch ein Abdeckteil des Grundkörpers abgedeckten Nut angeordnet ist. Auf diese Weise lässt sich der Fahrdraht in einfacher Weise in den Grundkörper einlegen, selbst wenn er bereits in einem Oberleitungssystem aufgehängt ist.

In einer zusätzlichen Weiterbildung der angegebenen Einfettvorrichtung ist die Versorgungsleitung durch das Abdeckteil geführt. Dabei kann das Abdeckteil kraftschlüssig mit dem Führungskörperteil verbunden sein.

In einer anderen Weiterbildung der angegebenen Einfettvorrichtung weist die Durchgangsöffnung einen trichterförmigen Bereich auf, in dem sich eine in der Querrichtung gesehene Öffnungsbreite über die Längsrichtung hin nach der Versorgungsleitung verjüngt. Auf diese Weise wird das Fett beim Ziehen des Fahrdrahtes durch die Durchgangsöffnung gegen den Fahrdraht gedrückt, was in einen homogenen Fettauftrag an den Stellen führt, an denen das Fett auf den Fahrdraht aufgetragen werden soll.

In einer weiteren Weiterbildung der angegebenen Einfettvorrichtung ist der trichterförmige Bereich als in die Durchgangsöffnung einsetzbarer Einsatz ausgebildet, so dass sich der trichterförmige Bereich an Fahrdrähte verschiedener Stärken anpassen lässt.

In einer noch weiteren Weiterbildung der angegebenen Einfettvorrichtung ist in der Längsrichtung gesehen vor dem trichterförmigen Bereich eine Führungshülse angeordnet, die den Fahrdraht wenigstens in der Querrichtung positioniert. Auf diese Weise lässt sich der Fahrdraht mittig in der Durchgangsöffnung positionieren, so dass der Fettauftrag auf der in der Querrichtung gesehen linken Seite des Fahrdrahtes genauso stark ist, wie der in der Querrichtung gesehene Fettauftrag auf der rechten Seite des Fahrdrahtes.

In einer besonderen Weiterbildung der angegebene Einfettvorrichtung ist die Führungshülse aus zwei in der Querrichtung verbindbaren Führungshülsenhälften zusammengesetzt. Die beiden Teile der Führungshülse lassen sich beim oben genannten Einsetzen des Fahrdrahtes in die Nut vorerst in einfacher Weise an den Fahrdraht anlegen, wobei sich Toleranzen durch ungenaue Positionierung der beiden Führungshülsenhälften zueinander in der Höhenrichtung nicht allerdings in der für die Positionierung des Fahrdrahtes relevanten Querrichtung auswirken.

In einer noch anderen Weiterbildung der angegebenen Einfettvorrichtung ist die Nase in einer in der Längsrichtung gesehen nach dem trichterförmigen Bereich angeordneten Abstreifhülse angeordnet. Die Abstreifhülse lässt sich an verschiedene Drahtstärken anpassen, so dass sich die Nase stets optimal zum jeweils einzufettenden Fahrdraht positionieren lässt.

In einer bevorzugten Weiterbildung der angegebenen Einfettvorrichtung ist die Abstreifhülse aus zwei in der Höhenrichtung verbindbaren Abstreifhülsenhälften zusammengesetzt. Auf diese Weise lässt sich der Fahrdraht zwischen die beiden Abstreifhülsenhälften einsetzen und die Nase durch das oben genannte krafttschlüssige Verbinden des Abdeckteils mit dem Führungskörperteil auf den Fahrdraht drücken.

In einer zusätzlichen Weiterbildung umfasst die angegebene Einfettvorrichtung zwei in der Längsrichtung vor der Vorderseite des Grundkörpers angeordnete Umlenkrollen, welche je um eine in der Höhenrichtung ausgerichtete Drehachse drehbar und in der Querrichtung beabstandet zueinander auf einer gleichen Höhe in der Höhenrichtung angeordnet sind, um den Fahrdraht in die Durchgangsöffnung umzulenken.

In einer besonderen Weiterbildung der angegebenen Einfettvorrichtung ist die Durchgangsöffnung an der Bodenseite an eine Form des Fahrdrahtes an einer zum Pantographen richtbaren Fahrdrahtunterseite angepasst. Auf diese Weise ist sichergestellt, dass sich der Fahrdraht mit seiner Fahrdrahtunterseite formschlüssig in die Durchgangsöffnung legt, so dass diese Seite nicht eingefettet wird.

In einer anderen besonderen Weiterbildung umfasst die angegebene Einfettvorrichtung eine in der Längsrichtung an der Vorderseite des Grundkörpers gehaltene Anschlusskupplung zum Anbinden einer Zugvorrichtung, die eingerichtet ist, den Grundkörper in der Längsrichtung zu ziehen. Auf diese Weise lässt sich die angegebene Einfettvorrichtung in einfacher Weise über den Fahrdraht ziehen, der so beispielsweise in einem Oberleitungssystem verlegt eingefettet werden kann.

In einer besonders bevorzugten Weiterbildung der angegebenen Einfettvorrichtung umfasst die Anschlusskupplung zwei Halteelemente, die am Grundkörper bezüglich der Längsrichtung achsensymmetrisch gehalten sind. Auf diese Weise lässt sich die angegebene Einfettvorrichtung verkantungsfrei über den Fahrdraht ziehen.

Gemäß einem weiteren Aspekt der Erfindung umfasst ein Verfahren nach Anspruch 15 zum Einfetten eines Fahrdrahtes zur elektrischen Energieversorgung eines Pantographen eines Schienenfahrzeuges die Schritte Einlegen des Fahrdrahtes in eine Durchgangsöffnung eines sich in einer Längsrichtung, einer rechtwinklig zur Längsrichtung liegenden Querrichtung und einer rechtwinklig zur Längsrichtung und rechtwinklig zur Querrichtung liegenden Höhenrichtung erstreckenden Grundkörpers, wobei die Durchgangsöffnung den Grundkörper in der Längsrichtung gesehen von einer Vorderseite zu einer in der Längsrichtung gesehenen Rückseite hin durchdringt, Einleiten eines Fettes in die Durchgangsöffnung über eine winklig zur Durchgangsöffnung verlaufenden Versorgungsleitung, und Ziehen des Grundkörpers in der Längsrichtung.

Erfindungsgemäß umfasst das Verfahren ferner den Schritt Abstreifen von Fett, das auf dem durch den Grundkörper gezogenen Fahrdraht aufgetragen ist, an einer in der Höhenrichtung gesehenen Oberseite des Fahrdrahtes mit einer Nase gegen eine Bodenseite der Durchgangsöffnung,

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Ansicht einer Fahrstrecke mit einer Stromschiene, in der ein Fahrdraht gehalten ist,
Fig. 2 eine schematische Ansicht einer Fettmanschette zum Einfetten des Fahrdrahtes aus der Fig. 1 aus einer ersten Perspektive,
Fig. 3 eine schematische Ansicht der Fettmanschette aus Fig. 2 aus einer zweiten Perspektive,
Fig. 4 eine schematische Ansicht eines Teils der Fettmanschette aus Fig. 2 aus der zweiten Perspektive,
Fig. 5 eine Schnittansicht der Fettmanschette aus Fig. 2 an einer ersten Stelle,
Fig. 6 eine Schnittansicht der Fettmanschette aus Fig. 2 an einer zweiten Stelle,
Fig. 7 eine Schnittansicht der Fettmanschette aus Fig. 2 an einer dritten Stelle, und
Fig. 8 eine schematische Ansicht eines weiteren Teils der Fettmanschette aus Fig. 2 aus einer dritten Perspektive.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

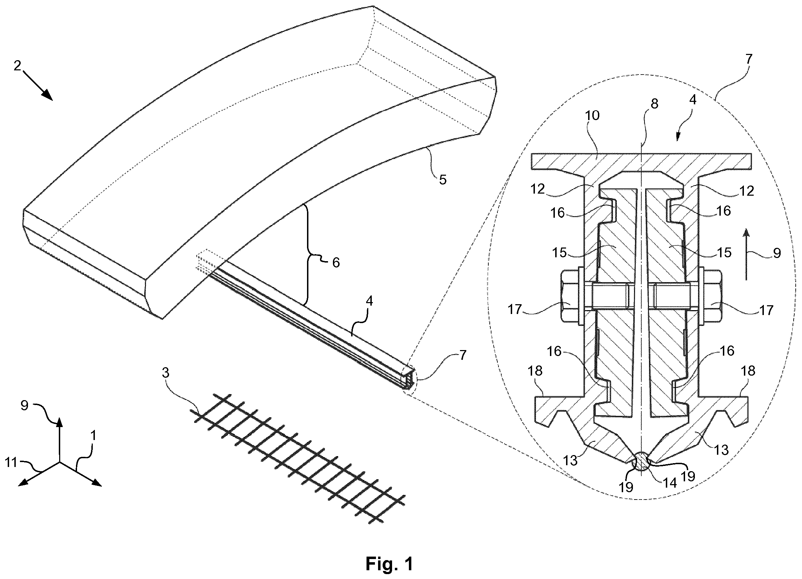

Es wird auf Fig. 1 Bezug genommen, die eine sich in einer Fahrtrichtung 1 oder Längsrichtung 1 erstreckende Fahrstrecke 2 mit einem Gleis 3 zeigt, auf der sich ein nicht gezeigter Zug elektrisch angetrieben geführt durch das Gleis 3 bewegen kann. Zur elektrischen Energieversorgung des Zuges ist in einer nicht weiter referenzierten Höhe über dem Gleis 3 eine sich ebenfalls in der Längsrichtung 1 erstreckende Stromschiene 4 angeordnet, aus der der Zug mit einem nicht weiter dargestellten Pantographen elektrischen Strom in an sich bekannter Weise entnehmen kann.

Die Stromschiene 4 ist an einem Träger aufgehängt, der in der Fig. 1 in beispielhafter Form einer Decke 5 dargestellt ist. Die Decke 5 könnte beispielsweise Teil eines Tunnels oder einer Brücke sein. Die Stromschiene 4 lässt sich über nicht weiter dargestellte Aufhängemittel in einem Aufhängeabstand 6 zur Decke 5 halten.

In Fig. 1 ist das Profil 7 der Stromschiene 4 vergrößert dargestellt.

Im Profil 7 gesehen ist die Stromschiene 4 achsensymmetrisch zu einer Profilachse 8 ausgebildet. Die Profilachse 8 verläuft dabei parallel zu einer Höhenrichtung 9 der Fahrstrecke 2. In der Höhenrichtung 9 gesehen befindet sich an der Oberseite der Stromschiene 4 ein Querarm 10, von dem sich in einer rechtwinklig zur Längsrichtung 1 und rechtwinklig zur Höhenrichtung 9 verlaufenden Querrichtung 11 gesehen beabstandet zueinander zwei Spannarme 12 entgegen der Höhenrichtung 9 erstrecken. An das dem Querarm 10 gegenüberliegende Ende eines jeden Spannarms 12 schließt sich je ein Klemmarm 13 an, zwischen denen ein Fahrdraht 14 eingeklemmt durch die Spannarme 12 gehalten ist.

Die in Fig. 1 gezeigte Stromschiene 4 wird gewöhnlich aus einer Vielzahl an Stromschienenabschnitten zusammengesetzt, die im Profil 7 der Fig. 1 gesehen stirnseitig über Stoßlaschen 15 exakt aufeinander ausgerichtet aneinander gelegt werden. Die gegenseitige Ausrichtung erfolgt über einen in Höhenrichtung 9 wirkenden Formschluss zwischen den Stoßlaschen 15 und den Stromschienenabschnitten, der in Fig. 1 als Feder-Nut-Verbindung 16 ausgeführt ist. Zur Fixierung der einzelnen Stromschienenabschnitte gegeneinander lassen sich in die Stoßlaschen 15 Schrauben 17 einschrauben.

Um den Fahrdraht 14 zwischen den Klemmarmen 13 einzuklemmen, schließen sich an einer Verbindungsstelle zwischen dem Klemmarmen 13 und den Spannarmen 12 sich in beziehungsweise entgegen der Querrichtung 11 erstreckende Fahrstraßen 18 an, auf dem sich ein nicht weiter gezeigter Fädelwagen bewegen kann.

Sammelt sich an den resultierenden Klemmstellen 19 Wasser an, bilden sich Redoxreaktionen herbeiführende Lokalelemente. Aufgrund der Materialwahl in handelsüblichen Stromschienen ist der Abstand der Metalle an den Klemmstellen 19 in der elektrochemischen Spannungsreihe ausreichend groß, um bei dortigen Wasseransammlungen Verwitterungserscheinungen herbeizuführen. Zwar wurden bereits verschiedene Ansätze vorgeschlagen, die Wasseransammlungen zu reduzieren, um die Entstehung von Lokalelementen zu vermeiden, so zum Beispiel gemäß WO 2014/067989 A1 mit Entwässerungsöffnungen. Allerdings lässt sich das Auftreten von Wasser nie ganz vermeiden, weshalb es ein sinnvollerer Weg ist, die Klemmstellen 19 aktiv vor Wasser zu schützen.

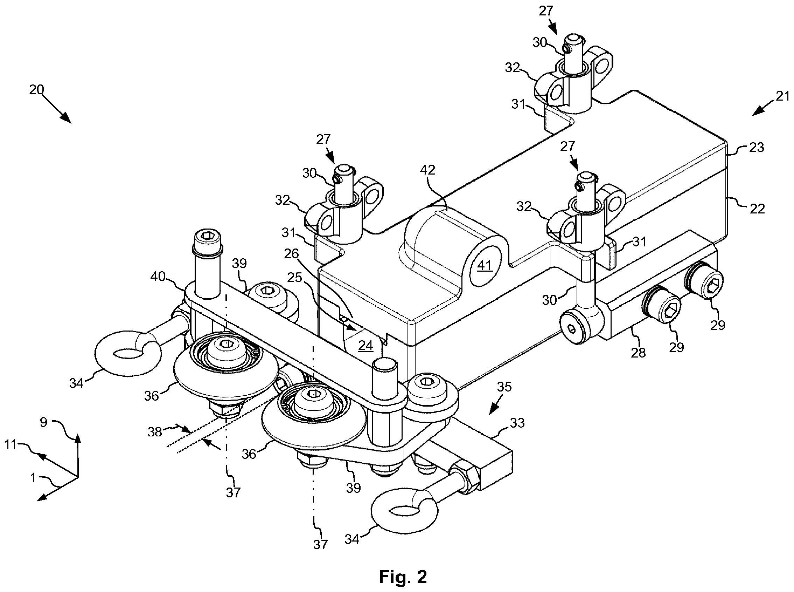

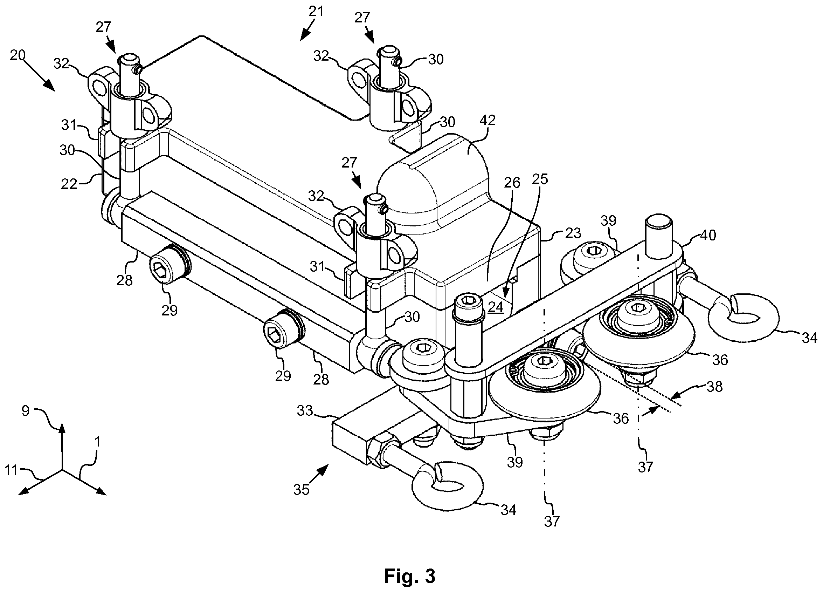

Hierzu wird eine in den Fig. 2 und 3 abgebildete Einfettvorrichtung 20, auch Fettmanschette genannt, vorgeschlagen, die den Fahrdraht 14 im Bereich der Klemmstellen 19 unmittelbar vor dem Einklemmen durch den Fädelwagen in der Stromschiene 4 mit Fett beschichtet, so dass an die Klemmstellen 19 nach dem Einklemmen des Fahrdrahtes 14 in der Stromschiene 4 kein Wasser mehr herantreten kann, welches die Stromschiene 4 und den Fahrdraht 14 überbrückt und so Lokalelemente bildet.

Die Einfettvorrichtung 20 umfasst einen Grundkörper 21, der sich unter anderem aus einem Führungskörperteil 22 und einem Abdeckteil 23 zusammensetzt.

Auf einer in der Höhenrichtung 9 gesehenen Oberseite des Führungskörperteils 22 ist eine Nut 24 eingeformt, die sich in der Längsrichtung 1 erstreckt. Die Nut 24 ist an den nicht weiter referenzierten Stirnseiten des Führungskörperteiles 22 in der Längsrichtung 1 gesehen geöffnet, so dass sich in die Nut 24 der Fahrdraht 14 einlegen lässt.

Auf die in der Höhenrichtung 9 gesehene Oberseite des Führungskörperteils 22 ist das Abdeckteil 23 aufgesetzt, so dass die Nut 24 verschlossen ist und eine Durchgangsöffnung 25 durch den Grundkörper 21 bildet. Zum lagegenauen Aufsetzen des Abdeckteils 23 auf dem Führungskörperteil 22 können am Abdeckteil 23 im Bereich der nicht weiter referenzierten Stirnseiten des Grundkörpers 21 in der Längsrichtung 1 gesehen je ein Positionierungsvorsprung 26 ausgebildet sein. Diese Positionierungsvorsprünge 26 greifen beim Aufsetzen des Abdeckteils 23 auf das Führungskörperteil 22 in der Querrichtung 11 gesehen formschlüssig in die Nut 24 ein. Das auf das Führungskörperteil 22 aufgesetzte Abdeckteil 23 wird dann über drei Schraubverbindungen 27 kraftschlüssig am Führungskörperteil 22 befestigt. Dabei sind am Grundkörper 21 in der Querrichtung 11 gesehen auf der Hinterseite eine Schraubverbindung 27 angeordnet, während an der Vorderseite zwei Schraubverbindungen 27 angeordnet sind.

Jede Schraubverbindung 27 umfasst eine sich in der Längsrichtung 1 erstreckende Befestigungsleiste 28, wobei die Befestigungsleisten 28 der Schraubverbindungen 27 an der in der Querrichtung 11 gesehenen Vorderseite des Grundkörpers 21 einstückig ausgebildet sind. Die Befestigungsleisten 28 sind mittels Schrauben 29 am Führungskörperteil 22 befestigt. An eine in der Längsrichtung 1 gesehene Stirnseite jeder Befestigungsleiste 28 schließt sich eine verschwenkbar um die Längsrichtung 1 gehaltene Gewindestange 30 an, die sich in je ein Gabelelement 31 am Abdeckteil 23 einschwenken lassen. Im Zustand, in dem die Gewindestangen 30 in die Gabelelemente 31 eingeschwenkt sind, wird je eine Flügelmutter 32 zur jeweiligen Befestigungsleiste 28 hin auf das jeweilige Gabelelement 31 aufgeschraubt, so dass das Abdeckteil 23 auf das Führungskörperteil 22 gedrückt wird, was die zuvor genannte kraftschlüssige Verbindung herstellt. Um einen Verlust der Flügelmuttern 32 im demontierten Zustand der Einfettvorrichtung 20 zu vermeiden, können am in der Höhenrichtung 9 gesehenen oberen Ende der Gewindestangen 30 der Übersichtlichkeit halber nicht weiter referenzierte Bewegungsbegrenzungsmittel ausgebildet sein.

Bevor auf das Einlegen des Fahrdrahtes 14 in die Nut 24 und damit die Durchgangsöffnung 25 sowie das Auftragen von Fett auf den Fahrdraht 14 darin näher eingegangen wird, soll kurz erläutert werden, wie die Einfettvorrichtung 20 im Einsatz über den Fahrdraht 14 gezogen wird, der in die Durchgangsöffnung 25 eingesetzt ist.

Hierzu besitzt die Einfettvorrichtung 20 an der in der Längsrichtung 1 gesehenen vorderen Stirnseite des Grundkörpers 21 einen in der Querrichtung 11 ausgerichteten Waagbalken 33, auch Waagscheit genannt. An den in der Querrichtung 11 gesehenen Enden des Waagbalkens 33 sind in der Längsrichtung 1 ausgerichtete Halteelemente in Form von Ösenschrauben 34. Der Waagbalken 33 sowie die Ösenschrauben 34 bilden gemeinsam ein Anschlusselement 35, über das sich die Einfettvorrichtung 20 an einen Zugmechanismus anschließen und über den Fahrdraht 14 in der Längsrichtung 1 ziehen lässt.

Auf dem Waagbalken 33 sind zwischen den beiden Ösenschrauben 34 zwei Umlenkrollen 36 um je eine Drehachse 37 drehbar gehalten, welche in der Höhenrichtung 9 ausgerichtet sind. Ferner sind die Umlenkrollen 36 Querrichtung 11 mit einem Rollenabstand 38 beabstandet zueinander gesehen angeordnet. Dabei sind die Umlenkrollen 36 gesehen von einer in der Höhenrichtung 9 gesehenen Unterseite des Grundkörpers 21 auf einer nicht weiter referenzierten Höhe angeordnet, die gleich einer ebenfalls nicht referenzierten Höhe der Durchgangsöffnung 25 ist, so dass sich der Fahrdraht 14 beim Ziehen der Einfettvorrichtung 20 in einer Kurve des Gleises 3 über die Umlenkrollen 36 geführt in einer vorbestimmten Drehlage um die Längsrichtung 1 in die Durchgangsöffnung 25 einführen lässt. Die Umlenkrollen 36 sind dabei je auf einem Schwenkarm 39 gehalten, so dass sich die Lage der Umlenkrollen 36 in der Querrichtung 11 an Querbewegungen des Fahrdrahtes 14 anpassen lässt. Um den Rollenabstand 38 dabei konstant zu halten, sind die Schwenkarme 39 über eine Koppelstange 40 miteinander verbunden.

Beim Ziehen der Einfettvorrichtung 20 über den Fahrdraht 14 wird der Fahrdraht 14 mit dem oben genannten Fett beschichtet. Dieses Fett wird in die Durchgangsöffnung 25 der Einfettvorrichtung 20 über eine Versorgungsleitung 41 eingeleitet. Die Versorgungsleitung 41 führt durch eine Anschlussbuchse 42, wie auf einer in der Höhenrichtung 9 gesehenen Oberseite des Abdeckteils 23 angeordnet ist. An die Anschlussbuchse 42 lässt sich eine nicht weiter dargestellte Zufuhrleitung anschließen, die das Fett aus einer nicht weiter gezeigten Quelle in die Versorgungsleitung 41 einspeist. Zwischen der Quelle und der Anschlussbuchse 42 kann zur Steuerung der zugeführten Fettmenge ein Hahn angeordnet werden. Das sich in der Durchgangsöffnung 25 so ansammelnde Fett wird auf den Fahrdraht 14 gedrückt, wodurch das Fett wiederum aufgetragen wird.

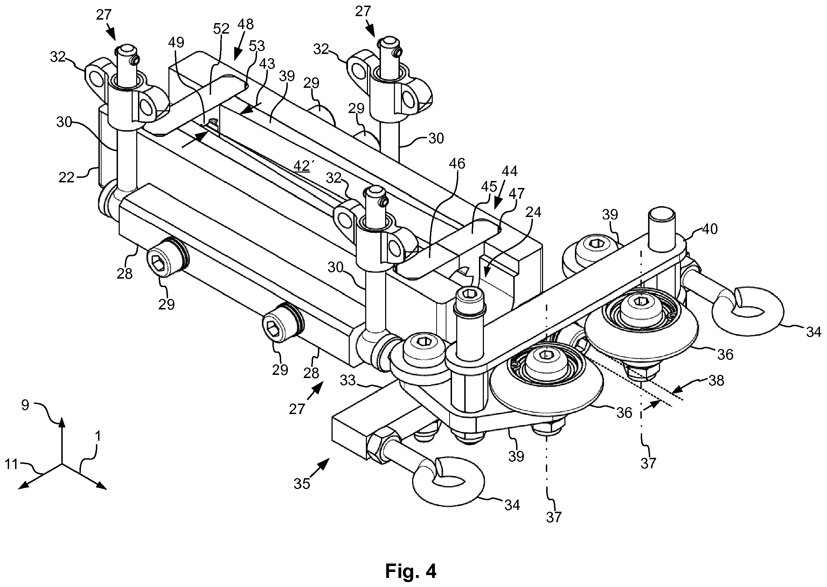

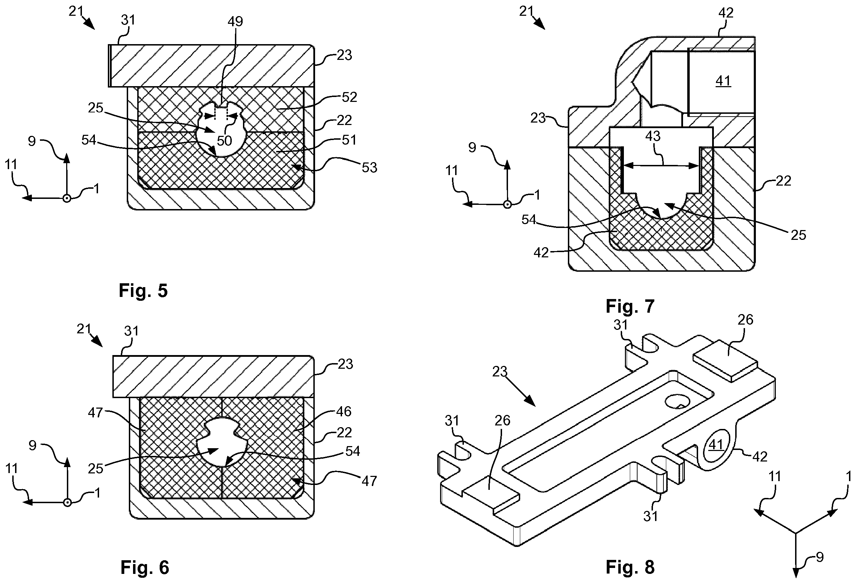

Der Fahrdraht 14 ist in der Praxis sehr lang und wird bei der Montage auf der Fahrstrecke 2 nach dem Einfetten sofort über den Fädelwagen in der Stromschiene 4 eingeklemmt. Daher ist es schwierig, den Fahrdraht in der Längsrichtung 1 gesehen stirnseitig in die Durchgangsöffnung 25 einzufädeln. Das Anlegen der Einfettvorrichtung 20 an den Fahrdraht 14 ist deshalb in der vorliegenden Ausführung in einer zweckmäßigeren Weise realisiert. Ferner erlaubt die Einfettvorrichtung 20 einen besonders effektiven Auftrag von Fett auf den Fahrdraht 14. Hierauf wird nachstehend anhand der Fig. 4 bis 8 näher eingegangen.

Die Durchgangsöffnung 25 weist einen trichterförmigen Bereich 42', in dem sich eine Öffnungsbreite 43 der Durchgangsöffnung 25 in der Querrichtung 11 entgegen der Längsrichtung 1 verjüngt. Diese Verjüngung findet mindestens in einem Abschnitt des trichterförmigen Bereichs 42' statt, der sich an die Stelle anschließt an der die Versorgungsleitung 41 in die Durchgangsöffnung 25 mündet. Ist der trichterförmige Bereich 42 mit Fett gefüllt und bewegt sich der Fahrdraht 14 entgegen der Längsrichtung 1 durch die Durchgangsöffnung 25, so staut sich das Fett am Ende des trichterförmigen Bereichs 42' und wird auf die Oberfläche des Fahrdrahtes 14 gedrückt. Auf diese Weise wird das Fett homogen auf den Fahrdraht 14 aufgetragen. Die Fettzufuhr aus der Versorgungsleitung 41 kann dabei beispielsweise über den oben genannten Hahn so eingestellt werden, dass kein überschüssiges Fett aus der Einfettvorrichtung 20 tropft. Das heißt, ist die Menge an über die Versorgungsleitung 41 zugeführtem Fett größer als die Menge an auf den Fahrdraht 14 aufgetragenem Fett, so wird das überschüssige Fett aus der Einfettvorrichtung 20 heraustropfen. Zu Beginn des Betriebes der Einfettvorrichtungff 30 sollte der oben genannte Hahn daher genau in diesen Zustand eingestellt und langsam zurückgedreht werden, bis kein Fett mehr aus der Einfettvorrichtung 20 tropft. So wird ein optimaler Fettauftrag erreicht.

Damit der trichterförmige Bereich 42 an Fahrdrähte 14 verschiedener Leiterquerschnitte angepasst werden kann, ist der trichterförmige Bereich 42 als Einsatz ausgebildet, der sich in die Nut 24 einsetzen lässt. Auf diese Weise kann der trichterförmige Bereich 42 durch Austausch des Einsatzes in einfacher Weise angepasst werden.

In der Längsrichtung 1 gesehen vor dem trichterförmigen Bereich 42' ist in der Durchgangsöffnung 25 eine Führungshülse 44 angeordnet. Die Führungshülse 44 besitzt einen nicht weiter referenzierten Durchgang, in dem der Fahrdraht 14 in der Höhenrichtung 9 und der Querrichtung 11 formschlüssig gehalten werden kann. Auf diese Weise korrigiert die Führungshülse 44 die Positionierung des Fahrdrahtes 14 beim Eintritt in den trichterförmigen Bereich 42' in einer bestimmten Winkellage um die Längsrichtung 1 herum sowie in der Querrichtung 11, so dass der Druck des Fettes beim Auftragen von in der Querrichtung 11 gesehenen beiden Seiten gleichmäßig wirkt. Die oben genannten Umlenkrollen 36 positionieren damit den Fahrdraht 14 grob vor, während die Führungshülse 44 eine Feinpositionierung vornimmt und den Fahrdraht 14 exakt mittig sowie in einer fest definierten Drehlage in den trichterförmigen Bereich 42' einführt.

Für ein einfaches Aufsetzen auf den Fahrdraht 14 ist die Führungshülse 44 aus einer ersten Führungshülsenhälfte 45 und einer zweiten Führungshülsenhälfte 46 aufgebaut, die sich durch Zusammenführen in beziehungsweise entgegen der Querrichtung 11 zur Führungshülse 44 zusammensetzen lassen. Die zusammengesetzte Führungshülse 44 ist in einer Führungshülsenschiene 47 im Führungskörperteil 22 gehalten.

Im Einsatz wird der Fahrdraht 14 in eine der Führungshülsenhälften 45, 46 eingesetzt und die Führungshülse 44 durch Aufsetzen der entsprechend anderen Führungshülsenhälfte 46, 45 in beziehungsweise gegen die Querrichtung 11 geschlossen. Die zusammengesetzte Führungshülse 44 lässt sich nun in die Führungshülsenschiene 47 einsetzen.

In der Längsrichtung 1 gesehen, auf der der Führungshülse 44 gegenüberliegenden Seite des tricherförmigen Bereiches 42 ist eine Abstreifhülse 48 angeordnet. Die Abstreifhülse 48 besitzt analog zur Führungshülse 44 einen Durchgang, in dem allerdings in der Höhenrichtung 9 gesehen an der Oberseite eine entgegen der Höhenrichtung 9 ausgerichtete Nase 49 angeordnet ist, die auf eine in der Höhenrichtung 9 gesehenen Oberseite des Fahrdrahtes 14 drückt. In der Querrichtung 11 gesehen links und rechts der Nase 49 sind so Hohlräume ausgebildet, durch die Fett die Abstreifhülse 48 passieren und auf den Fahrdraht 14 aufgetragen werden kann. Eine in Querrichtung 11 gesehene Nasenbreite 50 der Nase 49 ist dabei so gewählt, dass sich die Hohlräume an den Stellen des Fahrdrahtes 14 befinden, an denen die Klemmstellen 19 beim Einklemmen in der Stromschiene 4 vorgesehen sind.

Die Abstreifhülse 49 ist dabei aus einer unteren Abstreifhülsenhälfte 51 und einer oberen Abstreifhülsenhälfte 52 aufgebaut, die sich durch Zusammenführen in beziehungsweise entgegen der Höhenrichtung 9 zusammensetzen lässt. Zur Montage der Einfettvorrichtung 20 werden die untere Abstreifhülsenhälfte 51 in eine entsprechende Abstreifhülsenschiene 53 im Führungskörperteil 22 sowie die den trichterförmigen Bereich 42' bildende Einlage in die Nut 24 eingesetzt. Dann wird der Fahrdraht 14, um den die Führungshülse 44 in der oben beschriebenen Weise gelegt ist, in die untere Abstreifhülsenhälfte 51 und den trichterförmigen Bereich 42'eingelegt, wobei die Führungshülse 44 in die Führungshülsenschiene 47 in der oben beschriebenen Weise eingesetzt wird. Nun wird die obere Abestreifhülsenhälfte 52 in die Abstreifhülsenschiene 53 so eingesetzt, dass die Abstreifhülse 48 zusammengesetzt wird. Die Einfettvorrichtung 20 in diesem Montagezustand ist in Fig. 4 dargestellt. Abschließend wird das Abdeckteil 23 auf das Führungskörperteil 22 in der oben genannten Weise aufgesetzt und festgeschraubt. Nun lässt sich das Fett über die Versorgungsleitung 41 in die Durchgangsöffnung 25 im Bereich des trichterförmigen Bereichs 42 einleiten und das Fett in der bereits beschriebenen Weise auf den Fahrdraht 14 auftragen.

Um einen Fettauftrag an der Kontaktstelle des Pantographen des Fahrdrahtes 14 weitestgehend zu vermeiden, ist Durchgangsöffnung 25 an einer in der Höhenrichtung 9 gesehenen Bodenseite 54 an eine Form des Fahrdrahtes 14 angepasst. Auf diese Weise wird der Fahrdraht 14 an der Bodenseite 54 der Durchgangsöffnung 25 in der Höhenrichtung 9 und in der Querrichtung 11 formschlüssig aufgenommen, so dass an diese Stelle kein Fett gelangen kann. Die Nase 49 drückt dabei den Fahrdraht 14 gegen die Bodenseite 54 und unterstützt damit die Fettfreiheit des Fahrdrahtes 14 an der Kontaktstelle zum Pantographen. So ist sichergestellt, dass das Fett auf den Fahrdraht 14 tatsächlich nur im Bereich der Klemmstellen 19 und nirgends anders aufgetragen wird.

In den Figuren stellen Elemente mit gekreuzten Schraffuren Elemente dar, die aus Kunststoff ausgeführt sind. Gleich gekreuzte Schraffuren deuten dabei auf gleiche Kunststoffe hin. Die untere Abstreifhülsenhälfte 51 und die obere Abstreifhülsenhälfte 52 unterscheiden sich dabei im Kunststoffmaterial. Vorzugsweise ist die obere Abstreifhülsenhälfte 52 gegenüber der unteren Abstreifhülsenhälfte 51 aus einem weicheren Kunststoffmaterial gebildet.

## Patentansprüche

1. Einfettvorrichtung (20) für einen in eine Stromschiene (4) einklemmbaren Fahrdraht (14) zur elektrischen Energieversorgung eines Pantographen eines Schienenfahrzeuges, umfassend:
- einen Grundkörper (21), der sich in einer Längsrichtung (1), einer rechtwinklig zur Längsrichtung (1) liegenden Querrichtung (11) und einer rechtwinklig zur Längsrichtung (1) und rechtwinklig zur Querrichtung (11) liegenden Höhenrichtung (9) erstreckt,
- eine den Grundkörper (21) von einer in der Längsrichtung (1) gesehenen Vorderseite zu einer in der Längsrichtung (1) gesehenen Rückseite hin durchdringende Durchgangsöffnung (25), durch die der Fahrdraht (14) in der Längsrichtung (1) durchschiebbar ist, und
- eine in die Durchgangsöffnung (25) führende Versorgungsleitung (41) zum Einleiten eines auf den Fahrdraht (14) auftragbaren Fettes,
**dadurch gekennzeichnet, dass**
- die Durchgangsöffnung (25) in der Längsrichtung (1) gesehen nach der Versorgungsleitung (41) an einer in der Höhenrichtung (9) gesehenen Oberseite eine entgegen der Höhenrichtung (9) ausgerichtete Nase (49) besitzt, die eingerichtet ist, den Fahrdraht (14) gegen eine in der Höhenrichtung (9) gesehene Bodenseite (54) der Durchgangsöffnung (25) zu drücken.

2. Einfettvorrichtung (20) nach Anspruch 1, wobei die Durchgangsöffnung (25) in einer in einem Führungskörperteil (22) des Grundkörpers (21) eingeformten und durch ein Abdeckteil (23) des Grundkörpers (21) abgedeckten Nut (24) angeordnet ist.

3. Einfettvorrichtung (20) nach Anspruch 2, wobei die Versorgungsleitung (41) durch das Abdeckteil (23) geführt ist.

4. Einfettvorrichtung (20) nach Anspruch 2 oder 3, wobei das Abdeckteil (23) kraftschlüssig (30, 31, 32) mit dem Führungskörperteil (22) verbunden ist.

5. Einfettvorrichtung (20) nach einem der vorstehenden Ansprüche, wobei die Durchgangsöffnung (25) einen trichterförmigen Bereich (42') aufweist, in dem sich eine in der Querrichtung (11) gesehene Öffnungsbreite (43) entgegen der Längsrichtung (1) nach der Versorgungsleitung (41) verjüngt.

6. Einfettvorrichtung (20) nach Anspruch 5, wobei der trichterförmige Bereich (42) als in die Durchgangsöffnung (25) einsetzbarer Einsatz ausgebildet ist.

7. Einfettvorrichtung (20) nach Anspruch 5 oder 6, wobei in der Längsrichtung gesehen vor dem trichterförmigen Bereich (42') eine Führungshülse (44) angeordnet ist, die den Fahrdraht (14) wenigstens in der Querrichtung (11) positioniert.

8. Einfettvorrichtung (20) nach Anspruch 7, wobei die Führungshülse (44) aus zwei in der Querrichtung (11) verbindbaren Führungshülsenhälften (45, 46) zusammengesetzt ist.

9. Einfettvorrichtung (20) nach einem der vorstehenden Ansprüche 5 bis 8, wobei die Nase (49) in einer in der Längsrichtung (1) gesehen nach dem trichterförmigen Bereich (42') angeordneten Abstreifhülse (48) angeordnet ist.

10. Einfettvorrichtung (20) nach Anspruch 9, wobei die Abstreifhülse (48) aus zwei in der Höhenrichtung (9) verbindbaren Abstreifhülsenhälften (51, 52) zusammengesetzt ist.

11. Einfettvorrichtung (20) nach einem der vorstehenden Ansprüche, umfassend zwei in der Längsrichtung (1) vor der Vorderseite des Grundkörpers (21) angeordnete Umlenkrollen (36), welche je um eine in der Höhenrichtung (9) ausgerichtete Drehachse (37) drehbar und in der Querrichtung (11) beabstandet (38) zueinander auf einer gleichen Höhe in der Höhenrichtung (9) angeordnet sind, um den Fahrdraht (14) in die Durchgangsöffnung (25) umzulenken.

12. Einfettvorrichtung (20) nach einem der vorstehenden Ansprüche, wobei die Durchgangsöffnung (25) an der Bodenseite (54) an eine Form des Fahrdrahtes (14) an einer zum Pantographen richtbaren Fahrdrahtunterseite angepasst ist.

13. Einfettvorrichtung (20) nach einem der vorstehenden Ansprüche, umfassend eine in der Längsrichtung (1) an der Vorderseite des Grundkörpers (21) gehaltene Anschlusskupplung (35) zum Anbinden einer Zugvorrichtung, die eingerichtet ist, den Grundkörper (21) in der Längsrichtung (1) zu ziehen.

14. Einfettvorrichtung (20) nach Anspruch 13, wobei die Anschlusskupplung (35) zwei Halteelemente (34) umfasst, die am Grundkörper (21) bezüglich der Längsrichtung (1) achsensymmetrisch (33) gehalten sind.

15. Verfahren zum Einfetten eines Fahrdrahtes (14) zur elektrischen Energieversorgung eines Pantographen eines Schienenfahrzeuges, umfassend:
- Einlegen des Fahrdrahtes (14) in eine Durchgangsöffnung (25) eines sich in einer Längsrichtung (1), einer rechtwinklig zur Längsrichtung (1) liegenden Querrichtung (11) und einer rechtwinklig zur Längsrichtung (1) und rechtwinklig zur Querrichtung (11) liegenden Höhenrichtung (9) erstreckenden Grundkörpers (21), wobei die Durchgangsöffnung (25) den Grundkörper (21) in der Längsrichtung (1) gesehen von einer Vorderseite zu einer in der Längsrichtung (1) gesehenen Rückseite hin durchdringt,
- Einleiten eines Fettes in die Durchgangsöffnung (25) über eine winklig zur Durchgangsöffnung (25) verlaufenden Versorgungsleitung (41), und
- Ziehen des Grundkörpers (21) in der Längsrichtung (1), **gekennzeichnet durch**
- Abstreifen von Fett, das auf dem durch den Grundkörper (21) gezogenen Fahrdraht (14) aufgetragen ist, an einer in der Höhenrichtung (9) gesehenen Oberseite des Fahrdrahtes durch Drücken des Fahrdrahtes (14) mit einer Nase (49) gegen eine Bodenseite (54) der Durchgangsöffnung (25).

## Claims

1. Greasing device (20) for a contact wire (14) which can be clamped in a conductor rail (4) for supplying electrical power to a pantograph of a rail vehicle, comprising:
- a base body (21) extending in a longitudinal direction (1), a transverse direction (11) lying at right angles to the longitudinal direction (1) and a vertical direction (9) lying at right angles to the longitudinal direction (1) and at right angles to the transverse direction (11),
- a through opening (25) penetrating the base body (21) from a front side seen in the longitudinal direction (1) to a rear side seen in the longitudinal direction (1), through which the contact wire (14) can be pushed in the longitudinal direction (1), and
- a supply line (41) leading into the through-opening (25) for introducing a grease which can be applied to the contact wire (14),
**characterised in that**
- the passage opening (25) has, downstream of the supply line (41) as seen in the longitudinal direction (1), on an upper side as seen in the vertical direction (9), a lug (49) which is oriented counter to the vertical direction (9) and is arranged to press the contact wire (14) against a bottom side (54) of the passage opening (25) as seen in the vertical direction (9).

2. Greasing device (20) according to claim 1, wherein the through opening (25) is arranged in a groove (24) formed in a guide body part (22) of the base body (21) and covered by a cover part (23) of the base body (21).

3. Greasing device (20) according to claim 2, wherein the supply line (41) is guided through the cover part (23).

4. Greasing device (20) according to claim 2 or 3, wherein the cover part (23) is connected non-positively (30, 31, 32) to the guide body part (22).

5. Greasing device (20) according to one of the preceding claims, wherein the passage opening (25) has a funnel-shaped region (42') in which an opening width (43), as seen in the transverse direction (11), tapers towards the supply line (41) counter to the longitudinal direction (1).

6. Greasing device (20) according to claim 5, wherein the funnel-shaped region (42) is designed as an insert which can be inserted into the through-opening (25).

7. Greasing device (20) according to claim 5 or 6, wherein a guide sleeve (44), which positions the contact wire (14) at least in the transverse direction (11), is arranged in front of the funnel-shaped region (42'), as seen in the longitudinal direction.

8. Greasing device (20) according to claim 7, wherein the guide sleeve (44) is composed of two guide sleeve halves (45, 46) which can be connected in the transverse direction (11).

9. Greasing device (20) according to one of the preceding claims 5 to 8, wherein the nose (49) is arranged in a wiper sleeve (48) arranged downstream of the funnel-shaped region (42') as viewed in the longitudinal direction (1).

10. Greasing device (20) according to claim 9, wherein the wiping sleeve (48) is composed of two wiping sleeve halves (51, 52) connectable in the height direction (9).

11. Greasing device (20) according to one of the preceding claims, comprising two deflection rollers (36) arranged in the longitudinal direction (1) in front of the front side of the base body (21), which are each rotatable about an axis of rotation (37) aligned in the height direction (9) and are arranged at a distance (38) from one another in the transverse direction (11) at the same height in the height direction (9) in order to deflect the contact wire (14) into the passage opening (25).

12. Greasing device (20) according to any one of the preceding claims, wherein the through opening (25) at the bottom side (54) is adapted to a shape of the contact wire (14) at a contact wire underside which can be directed towards the pantograph.

13. Greasing device (20) according to one of the preceding claims, comprising a connection coupling (35) held in the longitudinal direction (1) at the front side of the base body (21) for connecting a pulling device which is arranged to pull the base body (21) in the longitudinal direction (1).

14. Greasing device (20) according to claim 13, wherein the connection coupling (35) comprises two holding elements (34) which are held on the base body (21) axially symmetrically (33) with respect to the longitudinal direction (1).

15. Method for greasing a contact wire (14) for the electrical power supply of a pantograph of a rail vehicle, comprising:
- Inserting the contact wire (14) into a through opening (25) of a base body (21) extending in a longitudinal direction (1), a transverse direction (11) lying at right angles to the longitudinal direction (1) and a height direction (9) lying at right angles to the longitudinal direction (1) and at right angles to the transverse direction (11), the through opening (25) penetrating the base body (21) from a front side as seen in the longitudinal direction (1) to a rear side as seen in the longitudinal direction (1),
- introducing a grease into the through hole (25) via a supply line (41) extending at an angle to the through hole (25), and
- pulling the base body (21) in the longitudinal direction (1), **characterised by**
- wiping off grease applied to the contact wire (14) pulled through the base body (21) on an upper side of the contact wire as seen in the height direction (9) by pressing the contact wire (14) with a nose (49) against a bottom side (54) of the passage opening (25).

## Revendications

1. Dispositif de graissage (20) pour un fil de contact (14) pouvant être serré dans un rail conducteur (4) pour l'alimentation en énergie électrique d'un pantographe d'un véhicule ferroviaire, comprenant :
- un corps de base (21) qui s'étend dans une direction longitudinale (1), une direction transversale (11) perpendiculaire à la direction longitudinale (1) et une direction de hauteur (9) perpendiculaire à la direction longitudinale (1) et perpendiculaire à la direction transversale (11),
- une ouverture de passage (25) traversant le corps de base (21) depuis un côté avant vu dans la direction longitudinale (1) jusqu'à un côté arrière vu dans la direction longitudinale (1), à travers laquelle le fil de contact (14) peut être poussé dans la direction longitudinale (1), et
- une conduite d'alimentation (41) menant dans l'ouverture de passage (25) pour introduire une graisse pouvant être appliquée sur le fil de contact (14),
**caractérisé en ce que**
- l'ouverture de passage (25) possède, vu dans le sens longitudinal (1) après la conduite d'alimentation (41), sur un côté supérieur vu dans le sens de la hauteur (9), un nez (49) orienté dans le sens opposé au sens de la hauteur (9), qui est conçu pour presser le fil de contact (14) contre un côté de fond (54) de l'ouverture de passage (25) vu dans le sens de la hauteur (9).

2. Dispositif de graissage (20) selon la revendication 1, dans lequel l'ouverture de passage (25) est disposée dans une rainure (24) formée dans une partie de corps de guidage (22) du corps de base (21) et recouverte par une partie de recouvrement (23) du corps de base (21).

3. Dispositif de graissage (20) selon la revendication 2, dans lequel la conduite d'alimentation (41) est guidée à travers la partie de recouvrement (23).

4. Dispositif de graissage (20) selon la revendication 2 ou 3, dans lequel la pièce de recouvrement (23) est reliée par adhérence (30, 31, 32) à la pièce de corps de guidage (22).

5. Dispositif de graissage (20) selon l'une des revendications précédentes, dans lequel l'ouverture de passage (25) présente une zone en forme d'entonnoir (42') dans laquelle une largeur d'ouverture (43), vue dans la direction transversale (11), se rétrécit à l'opposé de la direction longitudinale (1) vers la conduite d'alimentation (41).

6. Dispositif de graissage (20) selon la revendication 5, dans lequel la zone en forme d'entonnoir (42) est conçue comme un insert pouvant être inséré dans l'ouverture de passage (25).

7. dispositif de graissage (20) selon la revendication 5 ou 6, dans lequel, vu dans la direction longitudinale, une douille de guidage (44) est disposée devant la zone en forme d'entonnoir (42'), laquelle positionne le fil de contact (14) au moins dans la direction transversale (11).

8. Dispositif de graissage (20) selon la revendication 7, dans lequel la douille de guidage (44) est composée de deux demi-douilles de guidage (45, 46) pouvant être reliées dans la direction transversale (11).

9. Dispositif de graissage (20) selon l'une quelconque des revendications 5 à 8 précédentes, dans lequel le nez (49) est disposé dans un manchon racleur (48) disposé en aval de la zone en forme d'entonnoir (42'), vu dans la direction longitudinale (1).

10. Dispositif de graissage (20) selon la revendication 9, dans lequel le manchon racleur (48) est composé de deux demi-manchons racleurs (51, 52) pouvant être reliés dans la direction de la hauteur (9).

11. Dispositif de graissage (20) selon l'une des revendications précédentes, comprenant deux galets de renvoi (36) disposés dans la direction longitudinale (1) en avant de la face avant du corps de base (21), qui peuvent chacun tourner autour d'un axe de rotation (37) orienté dans la direction de la hauteur (9) et sont disposés à distance (38) l'un de l'autre dans la direction transversale (11) à une même hauteur dans la direction de la hauteur (9), afin de dévier le fil de contact (14) dans l'ouverture de passage (25).

12. Dispositif de graissage (20) selon l'une des revendications précédentes, dans lequel l'ouverture de passage (25) du côté du fond (54) est adaptée à une forme du fil de contact (14) sur une face inférieure du fil de contact pouvant être orientée vers le pantographe.

13. Dispositif de graissage (20) selon l'une des revendications précédentes, comprenant un accouplement de raccordement (35) maintenu dans la direction longitudinale (1) sur le côté avant du corps de base (21) pour l'accouplement d'un dispositif de traction qui est adapté pour tirer le corps de base (21) dans la direction longitudinale (1).

14. Dispositif de graissage (20) selon la revendication 13, dans lequel l'accouplement de raccordement (35) comprend deux éléments de retenue (34) qui sont maintenus sur le corps de base (21) de manière axisymétrique (33) par rapport à la direction longitudinale (1).

15. procédé de graissage d'un fil de contact (14) pour l'alimentation en énergie électrique d'un pantographe d'un véhicule ferroviaire, comprenant:
- Insertion du fil de contact (14) dans une ouverture de passage (25) d'un corps de base (21) s'étendant dans une direction longitudinale (1), une direction transversale (11) perpendiculaire à la direction longitudinale (1) et une direction de hauteur (9) perpendiculaire à la direction longitudinale (1) et perpendiculaire à la direction transversale (11), l'ouverture de passage (25) traversant le corps de base (21), vu dans la direction longitudinale (1), d'un côté avant vers un côté arrière vu dans la direction longitudinale (1),
- l'introduction d'une graisse dans l'ouverture de passage (25) par l'intermédiaire d'une conduite d'alimentation (41) s'étendant en angle par rapport à l'ouverture de passage (25), et
- traction du corps de base (21) dans la direction longitudinale (1), **caractérisé par**
- raclage de la graisse, qui est appliquée sur le fil de contact (14) tiré à travers le corps de base (21), sur un côté supérieur du fil de contact, vu dans le sens de la hauteur (9), par pression du fil de contact (14) avec un nez (49) contre un côté de fond (54) de l'ouverture de passage (25).
